# EUROPEAN PATENT APPLICATION

(11) **EP 3 576 255 A1**
(43) Date of publication of application: **04.12.2019**
(21) Application number: 18744985.5
(22) Date of filing: 19.01.2018
(51) Int. Cl.: H02K 3/00, H02K 3/28, H02K 21/14

(54) **ELECTRIC MOTOR WITH CONFIGURABLE COIL**

(30) Priority: 24.01.2017 ES 201700053
(71) Applicant: Tizona Motors SL, 28770 Colmenar Viejo (ES)
(72) Inventor: ZUÑIGA MANGAS, Luis, 28770 Colmenar Viejo (ES); RAMOS RAMOS, Angel Gabriel, 28770 Colmenar Viejo (ES)
(74) Representative: Pons Ariño, Angel
(86) International application number: PCT/ES2018/070044
(87) International publication number: WO 2018/138396

(57) **Abstract**

The invention relates to an electric motor in which the coil can be configured according to the specific needs of each case, so as to be able to play with the torque/speed ratio that it can provide at any particular moment. For this purpose, each winding of the coil that is used in the motor is divided into a predetermined number of wires (100) having the same cross-section and length, so that said wires are grouped together and insulated from one another defining a specific predetermined number of groups, the ends or poles (A1, A2, A3...,U1, U2, U3...) of each group being connected to switching means, via which the wires (100) are selectively connected in multiple configurations, either all in parallel, all in series or in various intermediate combinations, thus obtaining an equivalent coil in which the equivalent cross-section and length can vary according to the connection configuration of the wires (100).

## Description

### OBJECT OF THE INVENTION

The present invention relates to an electric motor, in which the coil has a special structure on the basis of which it can be configured both in an inoperative situation and while the motor is operating, in order to select different working configurations supplying more torque or more speed to the motor depending on the performance required at all times.

The invention has infinite applications, such that while it has preferably been provided to be applied to the mobility of electric vehicles, it is applicable to any other field in which electric motors do not operate under a constant speed, as well as in those areas in which said motors operate as generators or energy recovery systems, which enables the braking torque of the device to be regulated, whether in the automotive sector, wind turbines, etc.

### BACKGROUND OF THE INVENTION

Electric motors are very common and have multiple applications, some of which relate to the mobility of electric vehicles. These applications for the most part require electric motors with very high powers for the required performance. It therefore has great cooling demands, rendering solutions which in terms of space and cost are exaggerated and have high economic costs, such that they contribute to the inefficiency of electric motors, and this becomes most evident in mobility.

It is known that in a coil the larger the cross-section of the wire (and therefore the shorter its length with respect to the same coil with a wire having a smaller cross-section), the smaller its magnetic field.

With this principle and by applying it to electric motors, it is also known that the revolutions and torque vary depending on these parameters in the windings. Motors are manufactured today having the same power and on the same mechanical base that are specific for working at different revolutions and sacrificing torque.

This is an obstacle for applying them to mobility, for example, because if a motor with a winding having a small cross-section is selected, the motor will present low revolutions and very high torque, whereas if a winding having a large cross-section is selected, the opposite effect is obtained.

Spanish utility model U201400166 relates to a device for varying the performance of a permanent magnet electric motor and is based on control through the control box to operate the permanent magnet electric motor at different torques and speeds by means of a switching system, such that the winding thereof can be star- or delta-connected when desired. This type of system is used in many three-phase AC electric motors and is referred to as star-delta starter. It is used when it is necessary to start under load to then work at the rated speed, the relevant switching being performed by means of either mechanical or electrical automatons.

However, managing motors in that way is limited by the number of interconnections between phases and while it is true that motor output is improved, as it is completely compatible with the present invention, and where the combination of both is possible in all cases, a substantially improved global output can be achieved, which is the main objective of the present invention.

Application US20100019714 discloses a series of windings interconnected with one another by means of switches which enable increasing the number of poles, such that with this increase the low-speed torque is increased, while at the same time the number of poles is decreased as a result of an increase in speed. The number of poles is changed by making changes in the connections, which go from being connections in series to being connections in parallel, and vice versa. One way to make a change is by changing the pole configurations from delta (Δ) to double star (Y).

However, like in the preceding case, managing motors in that way is limited in this case by the number of poles and while it is true that motor output is improved, as it is completely compatible with the present invention, and where the combination of both is possible in all cases, a substantially improved global output can be achieved, which is the main objective of the present invention.

Finally, patent ES2356475T3 describes a motor having multiple windings, wherein the windings are different from one another given that it refers at all times to N cable types which are different from one another depending on the positions they occupy.

### DESCRIPTION OF THE INVENTION

The proposed motor solves in a fully satisfactory manner the problems set forth above based on a simple but highly effective solution.

To that end and more specifically, it is provided that each winding of the coil that is used in the motor is divided into a predetermined number of identical wires, that is, they have the same cross-section and length, characterised in that said wires are grouped together and insulated from one another defining as many groups as desired, the input and output ends or poles of each group being associated with switching means, via which it is possible to connect said wires in multiple ways, either all in parallel, all in series, or in various intermediate combinations.

Accordingly, the total number of wires used in each winding must be a multiple of the number of groups to be made.

Likewise, the sum of the cross-sections of the wires will yield the result of the cross-section of the wire calculated for the desired rated power with the lowest number of turns desired to be used.

Once winding and insulation of the groups of wires has been done, switching in series or in parallel will yield as a result the cross-section of the wire and the number of turns as needed for the motor to work with the maximum efficiency required at all working times.

Thus, and by means of the actuation of the corresponding switch, regardless of its type, it is possible to utilise variations in the electromagnetic field which are produced upon changing the cross-section and length of the resulting wire in the winding, achieving a different inductance controlled by the user of the equipment through the switching control.

Therefore, the switching control for connecting the different groups of wires enables, for example, maximizing the cross-section of the resulting wire, minimizing the length thereof, in which case maximum motor revolutions would be obtained, or maximizing the length (number of turns) of said resulting wire with a minimum cross-section, in which case maximum motor torque would be obtained, with multiple intermediate possibilities being defined, depending on the number of groups into which the winding is envisaged to be divided, where the motor can thereby be optimally adapted to the specific needs of each case.

The main feature of the winding described in this invention, unlike other multiple windings, is:
- In this case all the windings are identical (unlike motors with start windings).
- All the windings are always used.
- No action is taken on the number of poles or on the interaction of the phases, so the combination thereof is compatible with these other methods for managing the motor.
- The windings of each phase after being interconnected in any possible way act like a single wire, whereby its integrity is guaranteed for working at the power for which it was designed.

As mentioned above, the way to manage the motor proposed by the invention is particularly applicable in any electric vehicle in which many changes in the power delivery is required, depending on the speed, inclination of the ground, vehicle load, etc.

In parallel and as is evident, the system allows electrical generation by means of utilizing the kinetic energy recovered when the motor works as a brake or generator, such that depending on the desired retention the system can vary from abrupt retention to a smooth retention resulting in a different electrical generation, as well as multiple intermediate configurations.

The degree of retention for each specific case can thereby be optimised and the most effective electrical generation achieved, achieving a more effective utilization of the retention or braking which enables not only reducing power consumption but also the accumulation of power, increasing the autonomy of the vehicle in question.

Therefore, when going uphill, the motor will be arranged in the configuration in which greater magnetic force is generated and fewer watts are consumed, while on flat surfaces and at high speeds, the coil will be configured to obtain the maximum number of revolutions.

Switching will be managed by any electronic system that positions the motor depending on the demand and revolutions thereof, adapting the winding of the motor to the optimal configuration at all times, generating more or less force or more or less speed, thereby preventing the motor from overheating and therefore obtaining a higher output for each possibility.

The motor thus described therefore enables suitable management of the temperature thereof.

### DESCRIPTION OF THE DRAWINGS

As a complement to the description that will be provided herein, and for the purpose of helping to make the features of the invention more readily understandable, according to a preferred practical exemplary embodiment thereof, said description is accompanied by a set of drawings constituting an integral part thereof in which, by way of illustration and not limitation, the following is represented:
Figure 1 shows a diagram of four possible configurations and the results that are obtained depending on same, and offering an electric motor with a configurable coil carried out according to the object of the present invention, specifically in the present example a three-phase permanent magnet synchronous DC motor controlled by an electronic control box.
Figure 2 shows a diagram of the connections made by the control box or switching means that will be used in the motor for the configuration (C1) shown in Figure 1, specifically corresponding to the configuration in which it is possible to obtain the maximum speed of the motor.
Figure 3 shows a diagram of the connections made by the control box or switching means that will be used in the motor for the configuration (C2) shown in Figure 1.
Figure 4 shows a diagram of the connections made by the control box or switching means that will be used in the motor for the configuration (C3) shown in Figure 1.
Figure 5 finally shows a diagram of the connections made by the control box or switching means that will be used in the motor for the configuration (C4) shown in Figure 1, specifically corresponding with the configuration in which it is possible to obtain the maximum torque of the motor.

### PREFERRED EMBODIMENT OF THE INVENTION

A motor based on the motor of the invention, specifically a three-phase permanent magnet synchronous DC motor controlled by an electronic control box which controls switching is described below in view of the mentioned drawings and in a merely exemplary and obviously non-limiting manner.

For each of the phases, 6 wires (100) of 1 meter in length and having a cross-section of 1 mm² for each wire are wound on the core, said wires being duly insulated and finished at their ends with the corresponding input and output torques (A1, A2, A3, A4, A5, A6, U1, U2, U3, U4, U5 and U6) associated with switching means, in this case controlled by an electronic control box.

Based on the management that the control box is able to carry out in relation to the connections between the input and output torques of said wires (100), the configuration of each coil B1, B2, B3, and accordingly of the motor can change considerably and thus adapt to the specific needs of each case.

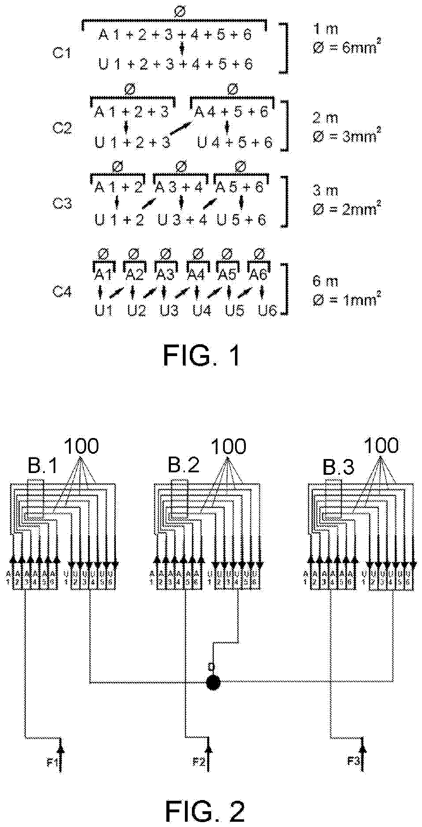

Therefore, according to the first configuration (C1) provided, shown in Figures 1 and 2, if all the inputs A1 to A6 are connected in parallel, and if the complementary outputs U1 to U6 are connected in parallel, a coil of 1 meter and having a cross-section of 6 mm² is obtained, corresponding with the sum of the cross-section of all the wires (100) as they are connected in parallel.

This configuration enables the maximum turning speed of the motor to be obtained.

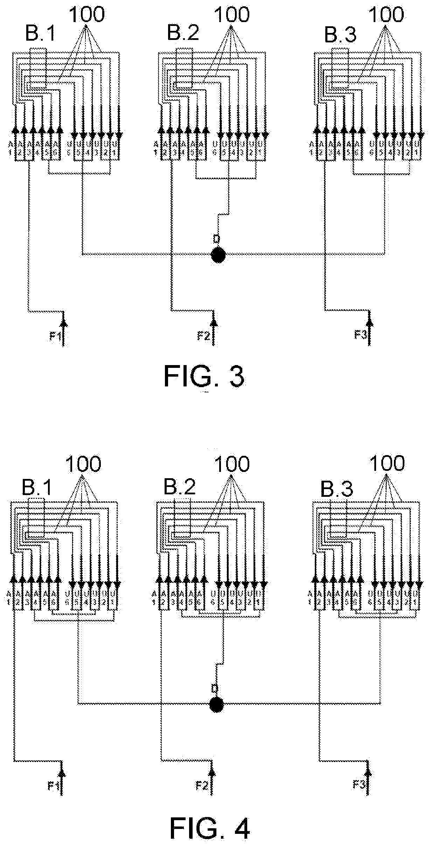

In turn, and according to the second configuration (C2) provided, shown in Figure 3, connecting in parallel the inputs A1 to A3 and outputs U1 to U3, as well as on the other hand connecting in parallel the inputs A4 to A6 and outputs U4 to U6, and connecting in series these two previously obtained subgroups, a coil of 2 m and having a cross-section of 3 mm² is achieved, which will enable the motor to offer a higher torque than the preceding configuration, at the expense of a lower speed.

According to the third configuration (C3) provided in Figure 4, the inputs and outputs of the wires (100) can be connected in parallel in twos, and these subgroups in turn can be connected to one another in series, so a coil of 3 m in length and having a cross-section of 2 mm² would be obtained, which will enable the motor to offer a higher torque than the preceding configuration, at the expense of a lower speed.

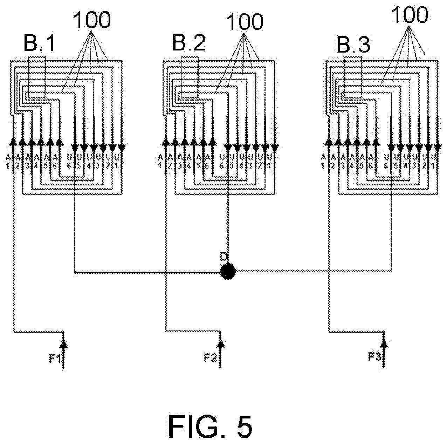

Finally and according to the fourth configuration (C4) provided in the example, shown in Figure 5, if all the wires (100) are connected in series through their terminals (A/U), it results in a coil of 6 m in length and having a cross-section of 1 mm², and in this configuration the motor enables the maximum torque to be offered.

All that remains to be indicated is that, as discussed above, since the structure of the motor is not affected as far as its poles are concerned with respect to a conventional electric motor, it can assisted by additional switching systems as far as managing its poles is concerned, without this affecting the essence of the invention.

## Claims

1. An electric motor with configurable coil, **characterised in that** each winding of the coil that is used in the motor is divided into a predetermined number of wires (100) having the same cross-section and length, **characterised in that** said wires are grouped together and insulated from one another defining a specific predetermined number of groups, the ends or poles (A1, A2, A3...,U1, U2, U3...) of each group being connected to switching means equipped with selective connection means for selectively connecting the wires (100) in multiple configurations, either all in parallel, all in series, or in various intermediate combinations, the total number of wires (100) used in each winding being a multiple of the number of groups into which said winding is divided.
